# EUROPEAN PATENT APPLICATION

(11) **EP 4 380 020 A1**
(43) Date of publication of application: **05.06.2024**
(21) Application number: 22847741.0
(22) Date of filing: 01.08.2022
(51) Int. Cl.: H02K 23/60, H02K 7/18, H02K 16/00

(54) **SYSTEM AND METHOD FOR EXPLOITING REACTION FORCE**

(30) Priority: 30.07.2021 BR 102021015094
(71) Applicant: Marcos Ferreira, Antonio, 85816050 Cascavel-PR (BR)
(72) Inventor: Marcos Ferreira, Antonio, 85816050 Cascavel-PR (BR)
(74) Representative: Dos Santos Cunha, Hallane Raissa
(86) International application number: PCT/BR2022/050301
(87) International publication number: WO 2023/004485

(57) **Abstract**

The present invention relates to electric motors and generators. In particular, it describes a system for exploiting the reaction force in order to increase the efficiency of motors by reducing the energy consumption, wherein both the stator and the rotor contain a shaft, allowing them both to rotate. The system for increasing efficiency of the present invention can be applied to electric motors and comprises: at least one motor (1) having a rotor element (1.1) and a stator element (1.2); at least one transmission element (3); at least one lift element (4); and at least one rotating shaft (2). The invention also relates to a method for exploiting the reaction force and increasing the efficiency of motors.

## Description

### Field of the Invention

The present invention relates to electric motors and generators. In particular, it describes a Reaction Force Exploiting System aimed at increasing efficiency in motors by reducing energy consumption, comprising a shaft in both the stator and the rotor, allowing the rotation of both. Additionally, a method for exploiting reaction force and increasing efficiency in motors is presented.

### Background of the Invention

Consumption of electric energy has been steadily increasing with a tendency for further growth. It is estimated that around one-third of all energy produced in Brazil is consumed by motors employed in industries.

An electric motor is a machine that converts electrical energy into mechanical power. In a motor, electric current associated with a magnetic field induces the movement of a magnet connected to a shaft. This shaft is responsible for transferring the generated mechanical force and is called a rotor, while the component used to generate the electric field is fixed in the motor housing and called a stator. The housing is responsible for protecting internal components, dissipating heat generated within the motor, and provides structure for attaching the motor to a fixed base where the motor will be attached.

The generator, on the other hand, has a structure and components very similar to the motor but its function is to convert mechanical energy into electricity.

In an effort to reduce energy consumption in motors and increase energy generation efficiency, several documents are found in the prior art.

Document PI0601233-7, titled "ELEVADOR DE POTENCIAL", describes an individual energy generation system provided with a general base housing all elements, a generator coupling the motor and a gearbox or reducer or both, a rear support base for the gearbox, a gearbox, couplings, a motor attached to the general base and connected to the gearbox, and a cabinet to house the assembly. This invention promises to reduce the consumption of electrical energy by creating an energy generation station for each user of the system, where electricity from a conventional power grid moves the motor shaft, which in turn moves the gearbox assembly and consequently the generator produces the necessary energy for the user.

Document MU9001205-4, titled "SISTEMA DE GERAÇÃO DE ENERGIA, EXISTENTE QUE FUNCIONA COM MOTORES ELÉTRICOS, MOTOR BOMBA, BOMBA HIDRÁULlCA, BATERIA E RODA EM CÓRREGOS E RIOS", describes an energy generation system generated through existing energy and consists of connecting an electric motor powered by existing energy, reducing electric energy consumption by 50% to 100%. The system is constituted by a motor, pinion and rack, counterweight, gearbox, generator, pulleys, belts, an external and internal support structure, fan, suction device, energy stabilizer, control panel, and wheels for movement.

The system described in document MU9001205-4 presents a set of equipment aimed at increasing efficiency in converting mechanical force into electrical energy, which is also one of the objectives of the present invention. However, although using similar, if not identical, components, the solution proposed by the present invention and its implementation are completely different, representing distinct technologies with different applications and results.

The motor is a known device that essentially converts electrical energy into mechanical energy. This process occurs when an electric field is associated with a magnet. As a result of this reaction, the rotor shaft moves. It is also known that this movement generates a mechanical reaction force, that is, when the shaft is rotated clockwise, the stator tends to rotate counterclockwise. Currently, the stator is fixed in the motor housing, and this housing, in turn, is fixed to a fixed base that receives the entire reaction force. Every time the motor is activated, the reaction force tries to rotate the stator and consequently the entire housing in the opposite direction to the rotor's rotation.

In this context, the present invention introduces a reaction force exploiting system that generates increased efficiency in electric motors by converting mechanical force into kinetic energy, contrary to the prior art.

Until now, this mechanical force transferred to the motor or generator housing has been wasted by fixing the motor housing to a fixed base.

The solution proposed in this invention allows for greater efficiency in the use of a motor and comprising a reduced number of elements compared to other systems in the prior art, and is suitable for application in existing motors as well as in the development of new motors.

### Summary of the Invention

In one aspect, the present invention describes a reaction force exploiting system. The system described by the present invention allows for an increase in the efficiency of electric motors. It also provides a simple construction with a reduced number of devices/elements.

Therefore, a first object of the present invention is a system to increase efficiency in electric motors, wherein said system comprises:
- at least one motor (1) comprising a rotor element (1.1) and a stator element (1.2);
- at least one transmission element (3);
- at least one lift element (4);
- at least one rotating shaft (2);

wherein the stator element (1.2) has at least one end for operational coupling of the transmission element (3);
wherein the transmission element (3) transmits the kinetic force and energy from the stator (1.2) when reacting with the rotor (1.1) to at least one rotating shaft (2);
wherein the motor containing the stator (1.2) and the rotor (1.1) are suspended from the fixed base by means of at least one lift element (4);
wherein the lift element (4) allows the rotation of the stator (1.2) and the motor rotor (1.1);
wherein the transmission element (3) transfers the kinetic force and energy exerted by the rotation of the stator (1.2) to at least one rotating shaft (2).

In a preferred embodiment, the transmission element (3), responsible for transmitting the kinetic force and energy from the motor (1) to the rotating shaft (2), is selected from at least one of the group consisting of: pulley, bearing, anti-backlash bearing, wheel, geared motor, belts, gears, steel cables, chains and pulleys, cardan, hydraulic pump.

Additionally, another object of the present invention is an electricity generator comprising at least one reaction force exploiting system, detailed in the present invention, as described in this document. The generator is a known component of the prior art and consists of converting kinetic energy into electrical energy. The application of the present invention in a generator allows for the creation of a more efficient device by harnessing the reaction force that would otherwise be wasted.

### Brief Description of the Figures

Figure 1 illustrates part of the force exploiting system in the configuration with the rotor shaft (1.1) on one side, that is, in the front portion, and the stator shaft (1.2) on the other side in its rear portion. It also illustrates the lift element (4) with only one contact point between the motor (1) and the fixed base (6).
Figure 2 illustrates a side view of the motor (1) with one shaft on each side, comprising a lift element with two contact points between the motor (1) and the fixed base (6).
Figure 3 illustrates an embodiment of the present invention comprising the rotor shaft (1.1) and the stator shaft (1.2) on opposite sides, allowing the observation of the lift element (4) and the transmission element (3) illustrated by the set of pulleys and belts.
Figure 4 illustrates the rear perspective view of an embodiment of the present invention with the rotor-associated shaft and the stator-associated shaft on opposite sides of said motor (1).

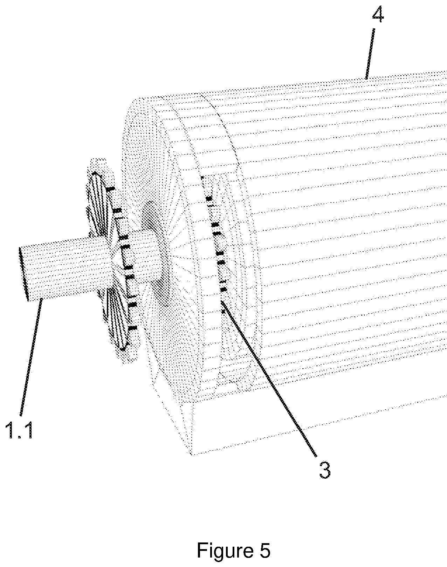

Figure 5 illustrates a perspective view of the Motor (1) surrounded by the lift element (4); rotor shaft (1.1) and transmission element (3) coupled to the stator shaft (1.2).

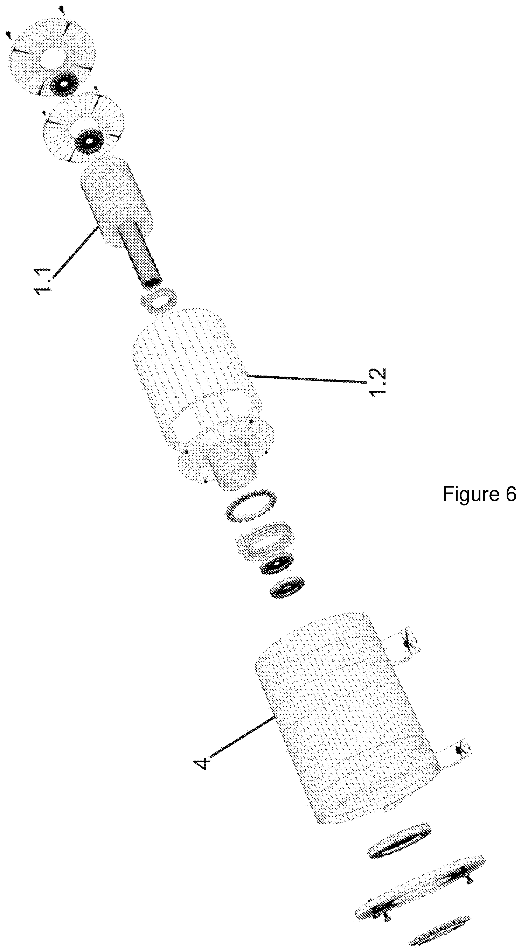

Figure 6 illustrates an exploded view of the motor (1) comprising rotor element (1.1) and stator element (1.2) in a configuration where the stator-associated shaft is on the same side as the rotor shaft, both in the front portion of the motor (1); transmission element (3) associated with the stator shaft; lift element (4) and other common components of the motor, such as bearings, rings, and bearings.

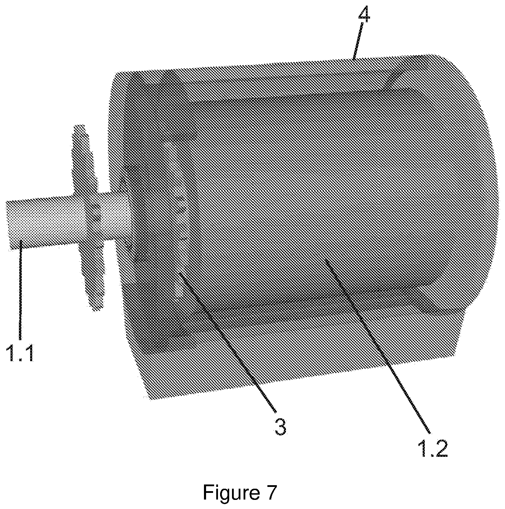

Figure 7 illustrates a cutaway and transparent view comprising motor (1) rotor shaft (1.4); stator (1.2); transmission element (3) associated with the stator (1.2); lift element (4).
Figure 8 illustrates a perspective view of one embodiment of the present invention where the transmission element is operationally associated with the rotor and stator, both arranged in the front portion of the motor (1).
Figure 9 illustrates the System applied to power generation, allowing the observation of a power source (5); transmission element (3) and lift element (4).
Figure 10 illustrates one of the several possible configurations, allowing the observation of a motor means (5) in this image represented by a water wheel arranged and operationally associated with the rotor shaft in the front portion of the motor; transmission element (3) and lift element (4).

### Detailed Description of the invention

The examples shown here are intended solely to exemplify one of the several ways to implement the invention, however, without limiting its scope.

The system for increasing efficiency of the present invention is applied to electric motors, where such a system comprises:
- at least one motor (1) comprising a rotor element (1.1) and a stator element (1.2);
- at least one transmission element (3);
- at least one lift element (4);
- at least one rotating shaft (2);

wherein the stator element (1.2) comprises at least one fixing end for coupling the transmission element (3);
wherein the transmission element (3) transmits the kinetic force and energy from the reaction of the stator (2.2) and rotor (2.1) in the motor (1) to at least one rotating shaft (4);
wherein the motor comprising the stator (2.2) and the rotor (2.1) are suspended from the fixed base through at least one lift element (4);
wherein the lift element (4) allows the rotation of the stator (2.2) and the motor rotor (2.1);
wherein the transmission element (3) transfers the kinetic force and energy exerted by the rotation of the stator (1.2) to at least one rotating shaft (2).

While in conventional motors the stator element is fixed in the motor, the model presented in the present invention has the stator element (1.2) with the ability to rotate when the electric field of the stator reacts with the magnetic field of the rotor. The motor, which is part of the present invention, maintains the basic components of conventional motors such as bearings and energy input elements.

In a preferred embodiment, the motor (1) consists of a DC or AC electric motor, comprising parts generally present in motors such as: stator, rotor, shaft operationally associated with the rotor, systems for energy input, bearings, and may comprisie a housing. Additionally, with the ability to rotate the stator (1.2) and the rotor (1.1), in a balanced manner, when operationally associated with the lift element (4).

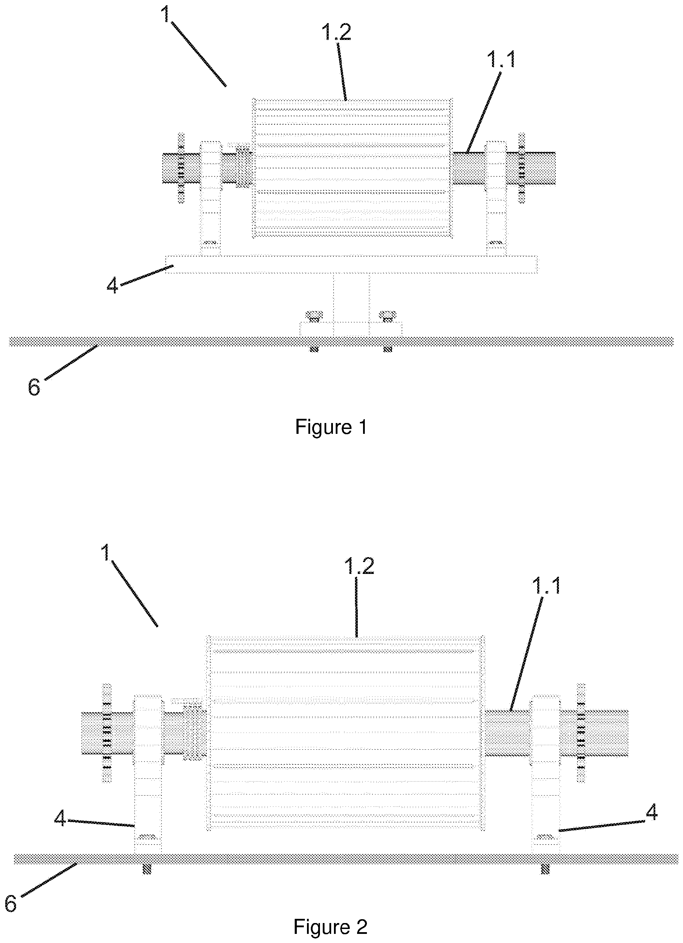

The lift element (4) may contain one or more contact points between the motor (1) and the fixed base, as can be observed in Figure 1 and Figure 2.

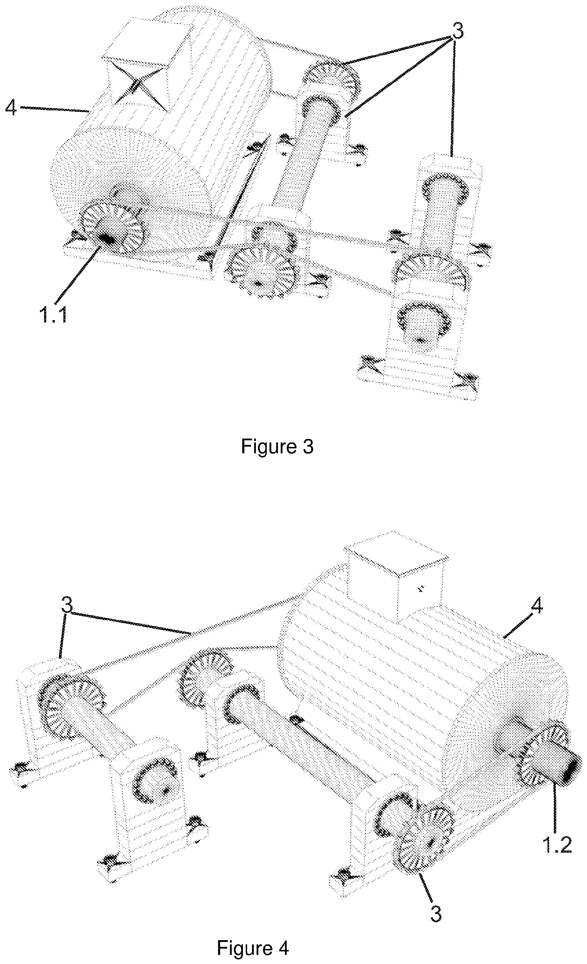

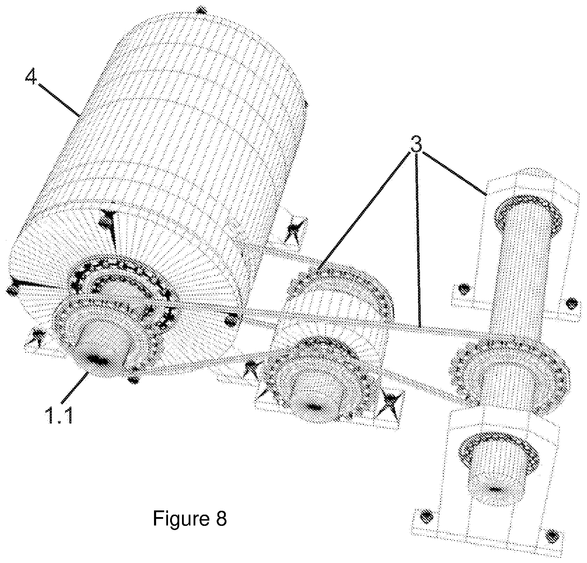

The kinetic force produced by the rotation of the stator (1.2) is transferred to the rotating shaft (2) associated with the rotor (1.1) be means of the transmission element (3). This shaft can be positioned on the opposite side of the rotor shaft as shown in Figures 3 and Figure 4, or on the same side as the rotor as shown in Figure 8.

In a preferred embodiment, the transmission element (3), responsible for transmitting the kinetic force and energy from the motor (1) to the rotating shaft (2), is selected from at least one of the group consisting of: pulley, bearing, anti-backlash bearing, wheel, geared motor, belts, gears, steel cables, chains and pulleys, cardan, hydraulic pump.

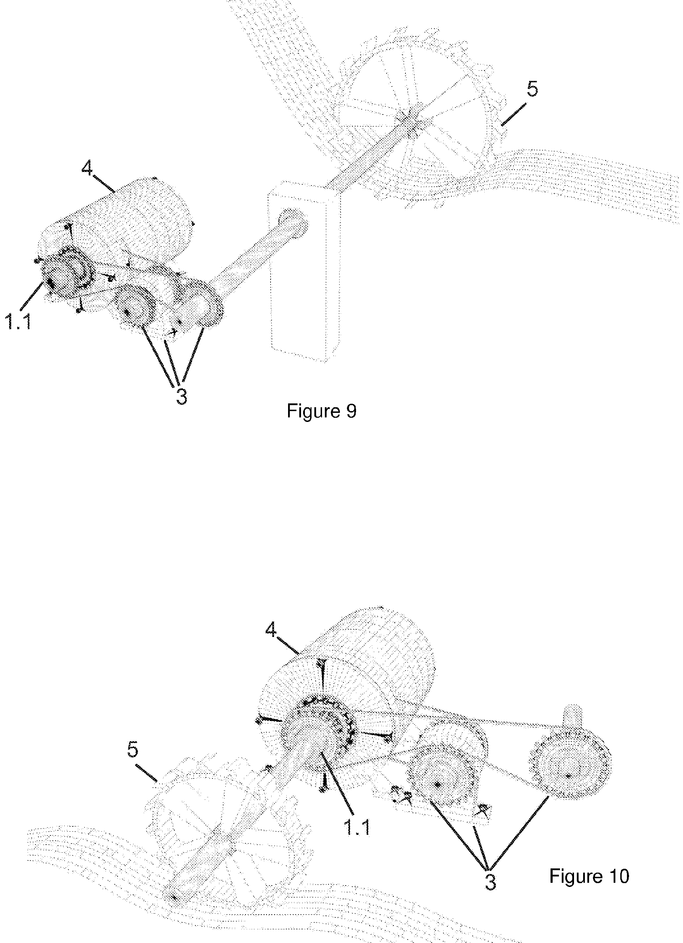

Additionally, this system can be applied to an electric power generator, as shown in Figure 9.

In generators, the mechanical force comes from a power source, with the most common being the manual power source, which comprises a system with a lever and/or a crank; electric power source; pneumatic power source; hydraulic power source; wind power source; combustion engine; thermoelectric power source.

For the production of electrical energy, the power source moves the rotor shaft, which in reaction with the stator produces electricity. In the system disclosed in the present invention, the force exerted by the power source moves the rotor shaft (1.1), which is operationally associated with the transmission element (3) that reverses the direction of rotation and transfers this energy to the stator (1.2). By rotating the stator element (1.2) in the opposite direction to the rotor (1.1), it is possible to reduce the number of rotations of the rotor while maintaining the same capacity of energy generation, requiring less force from the power source, or increase the energy generation capacity without the need to increase the force required to produce energy, respecting the limits of the generator equipment.

Preferably, the system and method for exploiting reaction force described by the present invention are applied to DC or AC electric motors and can be used for several applications, such as lathes, milling machines, conveyors, ventilation equipment, elevators, escalators, vehicles, generators, among others.

Additionally, the present invention provides a method for exploiting reaction force and increasing efficiency in motors comprising the steps of:
- allowing the stator of the motor, when activated, to rotate in the opposite direction to the rotor shaft;
- transmitting this rotation to the rotor shaft through the transmission element, in order to harness the force generated by the rotation of the stator as a complementary means of traction to the rotor shaft.

Those skilled in the art will appreciate the knowledge presented here and may reproduce the invention in the modalities presented and in other variants, covered by the scope of the appended claims.

## Claims

1. REACTION FORCE EXPLOITING SYSTEM **characterized by** comprising:
- at least one motor (1) comprising a rotor element (1.1) and a stator element (1.2);
- at least one transmission element (3);
- at least one lift element (4);
- at least one rotating shaft (2);
wherein the stator element (1.2) comprises at least one fixing end for coupling the transmission element (3);
wherein the transmission element (3) transmits the kinetic force and energy from the reaction of the stator (1.2) and the rotor (1.1) in the motor (1) to at least one rotating shaft (4);
wherein the motor comprising the stator (1.2) and the rotor (1.1) are suspended from the fixed base by means of at least one lift element (4);
wherein the lift element (4) allows the rotation of the stator (1.2) and the rotor of the motor (1);
wherein the transmission element (3) transfers the kinetic force and energy exerted by the rotation of the stator (1.2) to at least one rotating shaft (2).

2. REACTION FORCE EXPLOITING SYSTEM according to claim 1, **characterized by** the fact that the transmission element (3) is selected from at least one of the group consisting of pulley, bearing, anti-backlash bearing, wheel, geared motor, belts, gears, steel cables, chains and pulleys, cardan, hydraulic pump.

3. REACTION FORCE EXPLOITING SYSTEM according to claim 1, **characterized by** the fact that when constructed in a 2-shaft model, these can be arranged on the same side or on opposite sides of the motor.

4. REACTION FORCE EXPLOITING SYSTEM according to claim 1, **characterized by** the fact that the stator (1.2) has the ability to rotate at the same time as the rotor (1.1).

5. REACTION FORCE EXPLOITING SYSTEM applied to electric power generators, **characterized by** the fact that the rotor element (1.1) and the stator element (1.2) rotate in opposite directions.

6. REACTION FORCE EXPLOITING METHOD **characterized by** comprising at least the steps of:
- allowing the stator of the motor, when activated, to rotate in the opposite direction to the rotor shaft;
- transmitting this rotation to the rotor shaft be means of the transmission element, in order to harness the force generated by the rotation of the stator as a complementary means of traction to the rotor shaft.
